# EUROPÄISCHE PATENTSCHRIFT

(11) **EP 0 752 579 B1**
(45) Veröffentlichungstag und Bekanntmachung des Hinweises auf die Patenterteilung: **24.04.2002**
(21) Anmeldenummer: 96107849.0
(22) Anmeldetag: 17.05.1996
(51) Int. Cl.: G01L 5/24

(54) **Verfahren zur Herstellung einer Schraubverbindung**
Method for producing a screw connection
Méthode pour produire un vissage

(30) Priorität: 01.07.1995 DE 19524051
(43) Veröffentlichungstag der Anmeldung: 08.01.1997
(73) Patentinhaber: ROBERT BOSCH GMBH, 70442 Stuttgart (DE)
(72) Erfinder: Layer, August, Dipl.-Ing., 74613 Oehringen (DE); Rudolf, Hans, 71560 Sulzbach (DE); Batora, Marcus, Dipl.-Ing. (FH), 74226 Nordheim (DE)
(74) Vertreter: Friedmann, Jürgen, Dr.-Ing.

(56) Entgegenhaltungen:
- EP-A- 0 627 282
- DE-A- 3 128 557
- US-A- 4 517 821
- US-A- 4 571 696
- US-A- 5 105 519
- PATENT ABSTRACTS OF JAPAN vol. 017, no. 595 (M-1503), 29.Oktober 1993 & JP 05 177463 A (NITTO SEIKO CO LTD), 20.Juli 1993,
- PATENT ABSTRACTS OF JAPAN vol. 015, no. 485 (M-1188), 9.Dezember 1991 & JP 03 208531 A (SHIN MEIWA IND CO LTD), 11.September 1991,
- PATENT ABSTRACTS OF JAPAN vol. 014, no. 454 (M-1031), 28.September 1990 & JP 02 180531 A (NITTO SEIKO CO LTD), 13.Juli 1990,
- PATENT ABSTRACTS OF JAPAN vol. 018, no. 538 (M-1686), 13.Oktober 1994 & JP 06 190742 A (KUWANTAI SYST KK), 12.Juli 1994,
- DATABASE WPI Section EI, Week 9024 25.Juli 1990 Derwent Publications Ltd., London, GB; Class SO2, AN 90-183950 XP002044469 & SU 1 527 470 A (KUIBYSHEV POLY) , 7.Dezember 1989

## Beschreibung

Die Erfindung betrifft ein Verfahren zur Herstellung einer Schraubverbindung nach dem Oberbegriff des Anspruchs 1.

### Stand der Technik

Es ist bekannt (siehe z.B. JP 05 177 463 A und US 5 105 519 A) wenigstens zwei Teile mittels einer Schraubverbindung lösbar miteinander zu verbinden. Sollen hochwertige Schraubverbindungen hergestellt werden, so ist es erforderlich, den Schraubvorgang geregelt durchzuführen. Hierzu wird eine regelbare Schraubeinrichtung eingesetzt, mittels der beispielsweise die Einstellung solcher Parameter wie Drehmoment, Drehwinkel, Einschraubzeit, Einschraubtiefe usw. möglich ist. Die regelbaren Schraubeinrichtungen besitzen hierzu Mittel, insbesondere Drehmomentensensoren und/oder Drehwinkelsensoren, mittels der die Meßwerte erfaßbar und einer Regelschaltung zuführbar sind. In Abhängigkeit der gemessenen Parameter wird der Schraubvorgang bei Erreichen der vorgegebenen Werte intelligent beendet.

Hierbei ist jedoch nachteilig, daß zwischen von den an der Schraubeinrichtung angeordneten Sensoren gemessenen Meßwerten und den tatsächlichen an der Schraube vorhandenen Parametern Abweichungen bestehen. Diese Abweichungen sind beispielsweise in einem hohen Maß von einer Torsion einer Antriebsspindel der Schraubeinrichtung abhängig. Aufgrund dieser Torsion kommt es zu Fehlmessungen zwischen dem Drehwinkelgeber der Schraubeinrichtung und dem tatsächlichen Drehwinkel der Schraube. Darüber hinaus ist nachteilig, daß bei Erreichen eines bestimmten vorgebbaren Drehmomentes, mit dem die Schraubverbindung hergestellt werden soll, die Schraubeinrichtung zwar angehalten werden kann, aber eine mechanische Restspannung von der Schraubeinrichtung auf die Schraube übertragen wird. Hierdurch besteht ein Reibschluß zwischen der Schraubeinrichtung und der Schraube, so daß beim gewollten Abheben der Schraubeinrichtung nach Beendigung des Schraubvorgangs eine ungewollte und unkontrollierte Bewegung der verschraubten Teile auftreten kann. Insbesondere bei sogenannten Gruppenverschraubungen, das heißt, daß eine Vielzahl von Verschraubungen gleichzeitig ausgeführt werden, ist das zusätzliche Anordnen eines Niederhalters notwendig, damit ein Bewegen der verschraubten Teile verhindert werden kann.

### Vorteile der Erfindung

Das erfindungsgemäße Verfahren mit den im Anspruch 1 genannten Merkmalen hat demgegenüber den Vorteil, daß ein genaueres Einhalten der vorherbestimmten Parameter beim Herstellen einer Schraubverbindung möglich ist. Dadurch, daß beim Erreichen eines vorgebbaren Sollwertes wenigstens eines den Schraubfortschritt repräsentierenden Meßwertes die Schraubeinrichtung definiert reversiert wird, ist es vorteilhaft möglich, eine Kompensation der Torsion zu erreichen, so daß das Entstehen eines Meßfehlers aufgund der Torsion verhindert wird. Darüber hinaus ist vorteilhaft, daß durch die Reversierung sich das Arbeitsmittel der Schraubeinrichtung nach Abschluß des Schraubvorgangs in einem drehmomentlosen Zustand befindet, so daß ein Reibschluß zwischen dem Arbeitsmittel und der Schraube verhindert wird. Somit ist ein Abziehen der Schraubeinrichtung von der Schraube ohne Aufbringen einer Gegenkraft möglich. Insbesondere bei Gruppenverschraubungen kann auf die Anordnung einer zusätzlichen Gegenkrafteinrichtung verzichtet werden.

In vorteilhafter Ausgestaltung der Erfindung ist vorgesehen, daß die Schraubeinrichtung so lange reversiert wird, bis ein vorgebbarer Schwellwert eines den Schraubfortschritt repräsentierenden Meßwertes, vorzugsweise ein Schwellwert eines Drehmomentes, erreicht ist. Hierdurch wird es vorteilhaft möglich, eine sehr genaue Einstellung eines wählbaren Drehwinkels vorzunehmen, unter dem ein Schraubelement mittels der Schraubeinrichtung festgeschraubt wird.

Der Drehwinkel wird so sehr vorteilhaft erst zu einem Zeitpunkt gemessen, zu dem eine Torsion der Schraubeinrichtung durch deren Reversieren kompensiert wurde. Hierdurch wird der tatsächliche Drehwinkel ermittelt, der nicht durch einen Torsionsdrehwinkel verfälscht ist.

In weiterer vorteilhafter Ausgestaltung der Erfindung ist vorgesehen, daß die Schraubeinrichtung nach dem definierten Reversieren definiert nachgezogen wird, wobei die Schraubeinrichtung vorzugsweise um den doppelten Winkelbetrag eines Differenzwinkels (Torsionswinkel), der sich aus einem Drehwinkel zu einem vorgebbaren Drehmoment und dem Drehwinkel, der sich beim Erreichen des Schwellmomentes einstellt, ergibt, nachgezogen wird und die Schraubeinrichtung anschließend um den Torsionswinkel reversiert wird. Hierdurch ist es vorteilhaft möglich, die Schraubverbindung um den Torsionswinkel so weit nachzuziehen, daß nach dem definierten Entspannen der ursprünglich programmierte Zielwinkel in der zu verschraubenden Schraube erreicht wird. Die während des definierten Reversierens abgebaute Torsion der Schraubeinrichtung wird wieder aufgebaut und dann nochmals um den gleichen Torsionswinkelbetrag weitergezogen. Nach dem neuerlichen definierten Reversieren der Schraubeinrichtung ist eine genaue Einstellung eines Zielwinkels der Schraubverbindung möglich, der bei einem vorgebbaren Drehmoment eintreten soll.

Insgesamt können somit sehr genaue, definierte Bedingungen einhaltende Schraubverbindungen hergestellt werden.

Weitere vorteilhafte Ausgestaltungen der Erfindung ergeben sich aus den übrigen in den Unteransprüchen genannten Merkmalen.

### Zeichnung

Die Erfindung wird nachfolgend in einem Ausführungsbeispiel anhand der zugehörigen Zeichnungen näher erläutert. Es zeigen:
- Figur 1: eine schematische Darstellung einer regelbaren Schraubeinrichtung und
- Figur 2: ein Drehmoment/Drehwinkelverlauf eines Schraubvorgangs.

### Beschreibung des Ausführungsbeispiels

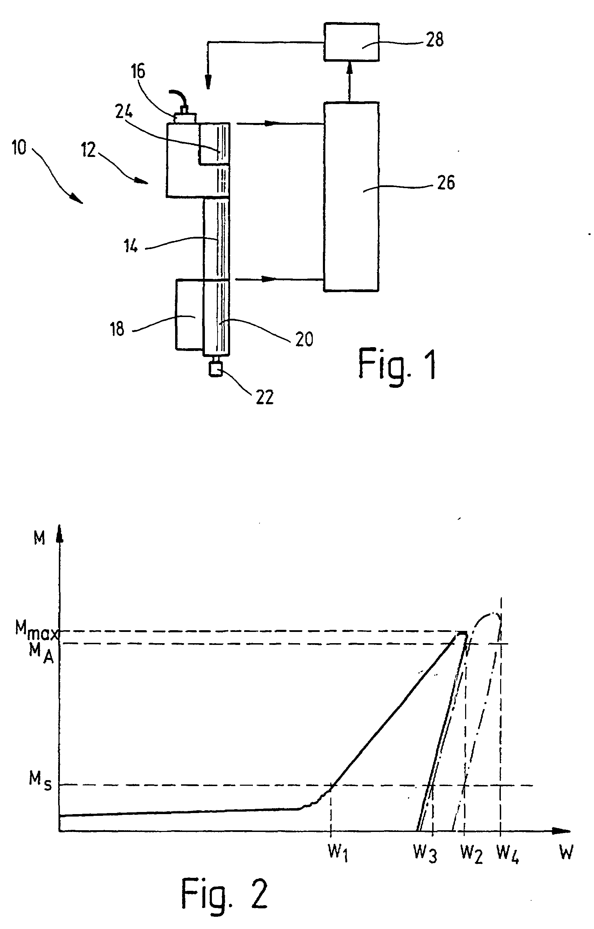

Figur 1 zeigt schematisch eine Schraubeinrichtung 10. Die Schraubeinrichtung 10 ist hier beispielhaft als servopneumatischer Schrauber 12 ausgebildet. Die Erfindung beschränkt sich jedoch nicht auf servopneumatische Schrauber, so kann die Schraubeinrichtung 10 selbstverständlich auch als andersartig angetriebener Schrauber, beispielsweise als Elektroschrauber, ausgebildet sein. Der servopneumatische Schrauber 12 besitzt als Antrieb einen Druckluftmotor 14. Die Leistung des Druckluftmotors 14 ist über ein Servoventil 16 regelbar. Das Servoventil 16 ist an eine geeignete, hier nicht dargestellte Druckluftquelle angeschlossen. Der Druckluftmotor 14 treibt eine Spindel 20 an, an deren Ende ein Arbeitsmittel 22, beispielsweise eine Nuß, zum Schrauben einer Schraube angeordnet ist. Der Schrauber 12 weist ferner einen Drehmomentensensor 18 zur Erfassung eines Drehmomentes und einen Drehwinkelsensor 24 zur Erfassung eines Drehwinkels auf. Mittels des Drehmomentensensors 18 kann das über die Spindel 20 beziehungsweise des Arbeitsmittels 22 auf die Schraube übertragene Drehmoment erfaßt werden, während mittels des Drehwinkelsensors 24 die Winkelstellung der Spindel 20 beziehungsweise des Arbeitsmittels 22 und damit der zu verschraubenden Schraube ermittelbar ist.

Der Drehmomentensensor 18 und der Drehwinkel sensor 24 sind mit einer hier lediglich angedeuteten Auswerteschaltung 26 verbunden. Die Auswerteschaltung 26 liefert ein Signal an eine Ventilansteuerung 28, die eine Stellgröße für das Servoventil 16 bereitstellt. Mittels der Auswerteschaltung 26 werden die aktuellen Drehmomente beziehungsweise Drehwinkel erfaßt beziehungsweise ausgewertet und in Abhängigkeit der Meßwerte die Ventilansteuerung 28 mit einem Reglerparameter versorgt. Die Ventilansteuerung 28 wiederum steuert über das Servoventil 16 den Druckluftmotor 14 in seiner Leistung und Drehzahl.

Mittels des in Figur 1 dargestellten Schraubers 12 ist die Herstellung einer Schraubverbindung möglich, bei der die zu verschraubende Schraube mit einem bestimmten wählbaren Drehmoment M und/oder einem bestimmten wählbaren Drehwinkel W möglich ist. Wird das gewählte Drehmoment M und/oder der gewählte Drehwinkel W erreicht, wird über die Auswerteschaltung beziehungsweise die Ventilansteuerung 28 der Schrauber 12 gestoppt beziehungsweise der Schraubvorgang beendet. Durch das beabstandete Anordnen des Drehwinkelsensors 24 zu dem Arbeitsmittel 22 führt eine aufgrund der Einwirkung des Drehmomentes M auftretende Torsion der Spindel 20 zu einem Drehwinkelfehler. Dieser Drehwinkelfehler kann je nach Steifigkeit der Spindel 20 bis zu 10° betragen.

Anhand des in Figur 2 dargestellten Diagrammes wird das erfindungsgemäße Verfahren zum Herstellen einer Schraubverbindung verdeutlicht. In dem Diagramm ist der Verlauf des Drehmomentes M über den Drehwinkel W dargestellt. Anhand des Kurvenverlaufes wird deutlich, daß das Drehmoment M mit dem Schraubfortschritt ansteigt. In dem Moment, wo die Schraube mit ihrem Schraubenkopf die zu verbindenden Teile berührt, steigt das über den Drehmomentensensor 18 gemessene Drehmoment M an. Während der Anstiegsphase wird während eines vorgegebenen Schwellmomentes Ms ein Drehwinkel W1 über den Drehwinkelsensor 24 erfaßt. Das Drehmoment M steigt bis auf ein Drehmoment M_{A} an. Dieses Drehmoment M_{A} ist ein vorgegebenes Drehmoment M, zu dem der Schrauber 12 abschalten soll, da die Schraubverbindung mit einem derartigen vorgegebenen Drehmoment hergestellt werden soll. Aufgrund eines Nachlaufens des Schraubers 12 steigt das Drehmoment M bis auf einen maximalen Wert Mₘₐₓ an. Zu dem Maximalmoment Mₘₐₓ wird ein weiterer Drehwinkel W2 ermittelt. Über die Auswerteschaltung 26 beziehungsweise die Ventilansteuerung 28 wird der Schrauber 12 mit einem Signal beaufschlagt, so daß ein Reversieren, das heißt, Rückwärtsdrehen der Spindel 20, erfolgt. Dieses Reversieren wird so lange durchgeführt, bis das Drehmoment M auf das vorgebbare Schwellmoment Ms abfällt. Zu diesem Zeitpunkt wird über den Drehwinkelsensor 24 ein Winkel W3 ermittelt. Das Reversieren des Schraubers 12 erfolgt beispielsweise mit einer Drehzahl, die ca. 10 % der Nenndrehzahl des Schraubers 12 beträgt. Die Schrauber 12 werden beispielsweise in Drehzahlbereichen von 100 bis 200 Umdrehungen pro Minute während der Einschraubphase und einer Drehzahl von 20 bis 50 Umdrehungen pro Minute während der Anzugsphase betrieben.

Durch das definierte Reversieren des Schraubers 12 wird es einerseits möglich, den Drehwinkel W3 zur Berechnung, des tatsächlichen Ergebnisdrehwinkels WE heranzuziehen, mit dem die Schraube verschraubt wurde. Der Ergebnisdrehwinkel WE ergibt sich, indem der Winkel W3 um den Betrag des Winkels W1 subtrahiert wurde. Dadurch, daß nunmehr der Winkel W3 für die Berechnung des Ergebniswinkels WE anstelle der bisherigen Verwendung des Winkels W2 zum Zeitpunkt des maximalen Drehmomentes Mₘₐₓ verwendet wird, ergibt sich, daß der dem Ergebniswinkels WE verfälschende Torsionswinkel der Spindel 20 W2 minus W3 unberücksichtigt bleibt. Somit ist eine sehr viel genauere Ermittlung des Ergebnisdrehwinkels WE möglich.

Zur Sicherheit kann die Ventilansteuerung 28 so ausgelegt sein, daß ein Reversieren des Schraubers 12 nur für eine bestimmte Maximaldauer erfolgt. Ist beispielsweise innerhalb einer Sicherheitszeit, die beispielsweise 500 msec betragen kann, das Drehmoment M nicht von dem Maximalmoment Mₘₐₓ auf das Schwellmoment Ms abgefallen, erfolgt automatisch eine Freigabe des Schraubers 12 oder eine Fehlermeldung mit einer entsprechenden Anzeige.

Über das Schwellmoment Ms hinaus wird der Schrauber 12 so lange reversiert, bis das Drehmoment M den Wert Null erreicht beziehungsweise diesen unterschreitet. Hierdurch wird neben der exakten Ergebniswinkelbestimmung erreicht, daß das Arbeitsmittel 22 auf dem Schraubenkopf in einen drehmomentlosen Zustand kommt. Es wird der Reibschluß zwischen dem Arbeitsmittel und dem Schraubenkopf abgebaut, so daß beim Abziehen des Schraubers 12 das Aufbringen einer Rückhaltekraft für die verschraubten Teile entfällt. Gerade bei den sogenannten Gruppenverschraubungen, bei denen eine Vielzahl, beispielsweise sechszehn bis zwanzig der in Figur 1 gezeigten Schraubeinrichtungen 10, gleichzeitig ein Teil verschrauben, ist ein Abziehen aller Schraubeinrichtungen 10 in einfacher Weise möglich, ohne daß eine Beeinträchtigung der Position der verschraubten Teile erfolgt.

Insgesamt erfolgt somit ein definiertes Beenden des Schraubvorgangs mittels der Schraubeinrichtung 10. Insbesondere wird das Arbeitsmittel 22, das in unmittelbarem Kontakt mit der zu verschraubenden Schraube steht, definiert entspannt. Ein Freigabesignal für den Schrauber 12 erfolgt somit definiert bei Erreichen bestimmter wählbarer, den Schraubfortschritt repräsentierender Meßwerte, hier des Drehmomentes und/oder des Drehwinkels.

Arbeitet der Schrauber 12 im Leerlauf, beziehungsweise es ist kein Schwellmoment Ms vorgegeben, kann eine Verschraubung ohne definiertes Entspannen und somit ohne eine Drehwinkelkorrektur erfolgen. Dem Leerlauf des Schraubers 12 kann hierzu ein bestimmtes Leerlaufdrehmoment zugeordnet werden, das beispielsweise 5 % vom effektiven Nennmoment beträgt. Wird zusätzlich zu dem Leerlaufdrehmoment das Schwellmoment Ms definiert, ergeben sich für ein Verfahren zur Herstellung der Schraubverbindung mehrere Möglichkeiten, den Schraubvorgang intelligent zu beenden. Mittels der Auswerteschaltung 26 kann ein gewähltes Ergebnismoment mit dem tatsächlich gemessenen Moment und einem vorgegebenen Schwellmoment fortlaufend in Beziehung gesetzt werden. In Abhängigkeit dieser Bewertung kann über die Ventilansteuerung 28 das erfindungsgemäße Reversieren des Schraubers 12 veranlaßt werden. Werden bestimmte Kriterien nicht erfüllt, unterbleibt das Reversieren, so daß eine normale Beendigung des Schraubvorgangs erfolgt.

Die nachfolgende Tabelle verdeutlicht die Ansprechmöglichkeiten der Ventilansteuerung 28.

| Ergebnismoment Schwellmoment Ms | | | |
|---|---|---|---|
| | Ms nicht definiert | Ms = 0 | Ms > 0 |
| Endmoment <=Leerlaufschwelle (Leerlauf) | Normal | Normal | Normal |
| Endmoment <=Schwellmoment (vorzeitiger Abbruch) | Normal | Normal | Normal |
| Endmoment >Leerlaufschwelle >Schwellmoment (Anzug auf Moment) | Normal | Reversierbetrieb | Reversierbetrieb |

Es wird deutlich, daß für den Fall, daß das Schwellmoment Ms mit einem Wert von Null oder größer als Null definiert wurde und das ermittelte Endmoment die definierte Leerlaufschwelle und das definierte Schwellmoment Ms überschreitet, ein Reversieren des Schraubers 12 ausgelöst wird. Für alle anderen Fälle, in denen das erreichte Endmoment unter der Leerlaufschwelle, im Falle eines Leerlaufes des Schraubers 12 beziehungsweise das Endmoment unter dem definierten Schwellmoment Ms, im Falle eines vorzeitigen Abbruchs des Schraubvorgangs liegt, erfolgt kein Umschalten in den erfindungsgemäßen Reversierbetrieb.

In der Figur 2 ist das Diagramm des Drehmomentenverlaufs mit einer Strich-Punkt-Linie ergänzt, anhand derer eine weitere Möglichkeit des erfindungsgemäßen Verschraubens erläutert werden soll. Nachdem die Schraubeinrichtung in der erläuterten Weise reversiert wurde, erfolgt ein definiertes Nachziehen der Schraube. Dieses definierte Nachziehen erfolgt derart, daß die Schraube zuerst um den von der Differenz der Winkel W2-W3 bestimmten Torsionswinkel angezogen wird, so daß die Schraube zu diesem Zeitpunkt den Drehwinkel W2 aufweist. Anschließend wird um den gleichen, dem Torsionwinkel entsprechenden Winkelbetrag nachgezogen. Hierbei steigt das Drehmoment M zu einem Drehwinkel W4, wobei der Winkel W4-W2=W2-W3 entspricht, an. Wird über den Drehwinkelsensor 24 der Drehwinkel W4 für die Spindel 20 detektiert, wird die Schraubeinrichtung 10 wiederum definiert reversiert, so daß sich die Torsion der Spindel 20 - in der zuvor erläuterten Weise - abbaut. Hierdurch wird erreicht, daß die Schraubverbindung mit dem zu dem Drehmoment M_{A} vorgegebenen Zielwinkel W2 sicher hergestellt werden kann. Durch das definierte Nachziehen der zuvor bereits reversierten Schraubeinrichtung 12 und das anschließende nochmalige definierte Reversieren sind Schraubverbindungen erzielbar, die ein hochgenaues Einstellen eines Zielwinkels bei winkelgesteuerten Schraubverfahren sicher ermöglichen.

## Patentansprüche

1. Verfahren zum Herstellen einer Schraubverbindung mittels einer regelbaren Schraubeinrichtung, wobei während des Schraubens den Schraubfortschritt repräsentierende Meßwerte, nämlich Drehmomente und Drehwinkel, ermittelt werden, **dadurch gekennzeichnet, daß** ein erster Drehwinkel (W₁) erfaßt wird, wenn das Drehmoment (M_{S}) ansteigt, daß beim Erreichen eines vorgebbaren Drehmoments (M_{A}) die Schraubeinrichtung definiert reversiert wird, bis der Drehmomentwert 0 erreicht bzw. dieser unterschritten wird, daß ein zweiter Drehwinkel (W₃) erfaßt wird, wenn während des Reversiervorgangs das Drehmoment (M_{S}) erreicht wird, bei dem der erste Drehwinkel (W₁) erfaßt wurde, und daß der erste Drehwinkel (W₁) von dem zweiten Drehwinkel (W₃) zum Ermitteln eines Ergebnisdrehwinkels der Schraubverbindung subtrahiert wird.

2. Verfahren nach Anspruch 1, **dadurch gekennzeichnet, daß** die Schraubeinrichtung mit einer kleineren als der Nenndrehzahl reversiert wird.

3. Verfahren nach Anspruch 2, **dadurch gekennzeichnet, daß** die Drehzahl ca. 10% der Nenndrehzahl beträgt.

4. Verfahren nach einem der vorhergehenden Ansprüche, **dadurch gekennzeichnet, daß** die Schraubeinrichtung nach dem definierten Reversieren definiert nachgezogen wird.

5. Verfahren nach Anspruch 4, **dadurch gekennzeichnet, daß** die Schraubeinrichtung um den doppelten Winkelbetrag eines Differenzwinkels (Torsionswinkel), der sich aus einem dritten Drehwinkel (W₂) zu einem vorgebbaren Drehmoment (M_{A}) und dem zweiten Drehwinkel (W₃) ergibt, bis zu einem vierten Drehwinkel (W₄) nachgezogen wird.

## Claims

1. Method of producing a screwed connection by means of a controllable screwdriving device, measured values, namely torques and rotary angles, which represent the screwdriving progress being determined during the screwdriving, **characterized in that** a first rotary angle (W₁) is detected when the torque (M_{S}) increases, **in that**, when a predeterminable torque (M_{A}) is reached, the screwdriving device is reversed in a defined manner until the torque value reaches zero or drops below zero, **in that** a second rotary angle (W₃) is detected when the torque (M_{S}) at which the first rotary angle (W₁) was detected is reached during the reversing operation, and **in that** the first rotary angle (W₁) is subtracted from the second rotary angle (W₃) for determining a resultant rotary angle of the screwed connection.

2. Method according to Claim 1, **characterized in that** the screwdriving device is reversed with a lower rotary speed than the nominal rotary speed.

3. Method according to Claim 2, **characterized in that** the rotary speed is about 10% of the nominal rotary speed.

4. Method according to one of the preceding claims, **characterized in that** the screwdriving device is re-tightened in a defined manner after the defined reversing.

5. Method according to Claim 4, **characterized in that** the screwdriving device is re-tightened up to a fourth rotary angle (W₄) by twice the angular amount of a differential angle (torsion angle) which results from a third rotary angle (W₂) at a predeterminable torque (M_{A}) and the second rotary angle (W₃).

## Revendications

1. Méthode pour réaliser une liaison par vis au moyen d'un dispositif de vissage réglable, avec, pendant le vissage, détermination de valeurs mesurées de grandeurs représentant l'avancement de la vis, en particulier de couples de rotation et d'angle de rotation,
**caractérisée en ce qu'**
un premier angle de rotation (W₁) est saisi au moment où le couple de rotation (M_{S}) croît et quand ce couple atteint une valeur (M_{A}) qui peut être donnée à l'avance, le dispositif de vissage est inversé de manière définie jusqu'à ce que la valeur du couple devienne nulle ou négative, et un deuxième angle de rotation (W₃) est saisi quand pendant le mouvement inverse, le couple de rotation (M_{S}) atteint la valeur correspondant à la saisie du premier angle de rotation (W₁), cet angle étant soustrait du second angle de rotation (W₃) pour définir un angle résultant de rotation du dispositif de vissage.

2. Méthode selon la revendication 1,
**caractérisée en ce que**
le dispositif de vissage est inversé à une vitesse inférieure à la vitesse nominale.

3. Méthode selon la revendication 2,
**caractérisée en ce que**
la vitesse de rotation atteint environ 10 % de la vitesse nominale.

4. Méthode selon l'une des revendications précédentes,
**caractérisée en ce que**
le vissage est poursuivi de manière définie après l'inversion définie.

5. Méthode selon la revendication 4,
**caractérisée en ce que**
le vissage est poursuivi du double de la valeur angulaire d'un angle différentiel (angle de torsion), obtenu en retirant d'un troisième angle de rotation (W₂) correspondant à un couple de rotation (M_{A}) pouvant être donné à l'avance, le deuxième angle de rotation (W₃), jusqu'à atteindre un quatrième angle de rotation (W₄).
